# EUROPEAN PATENT SPECIFICATION

(11) **EP 2 751 576 B1**
(45) Date of publication and mention of the grant of the patent: **08.03.2017**
(21) Application number: 12827821.5
(22) Date of filing: 29.08.2012
(51) Int. Cl.: G01N 35/00, G01N 1/36, B01L 3/00, B01L 9/00, G01N 21/03, G01N 21/25

(54) **PRESENTATION SYSTEM AND METHOD FOR LOW-VOLUME SOLUTION SAMPLES**
PRÄSENTATIONSSYSTEM UND -VERFAHREN FÜR KLEINVOLUMIG AUFGELÖSTE PROBEN
SYSTÈME ET PROCÉDÉ DE PRÉSENTATION POUR DES ÉCHANTILLONS DE SOLUTION DE FAIBLE VOLUME

(30) Priority: 30.08.2011 US 201113221591
(43) Date of publication of application: 09.07.2014
(73) Proprietor: Molecular Devices LLC, Sunnyvale, CA 94089 (US)
(72) Inventor: TANG, Hamilton Roger, Los Altos, California 94022 (US); YOUNGQUIST, Michael George, Palo Alto, California 94301 (US); ZHU, Chang, Union City, California 94587 (US)
(74) Representative: Mollekopf, Gerd Willi
(86) International application number: PCT/US2012/052773
(87) International publication number: WO 2013/033146

(56) References cited:
- EP-A2- 0 902 271
- WO-A1-2010/120249
- WO-A2-01/90729
- US-A- 5 939 329
- US-A- 5 939 329
- US-A1- 2002 039 796
- US-A1- 2002 039 796
- US-A1- 2006 139 621
- US-A1- 2007 217 955
- US-A1- 2010 031 757

## Description

### FIELD OF THE INVENTION

This invention relates to laboratory analysis devices and more particularly to laboratory analysis devices for holding low-volume solution samples.

### BACKGROUND

Researchers may measure low-volume solution samples using photometric measurement systems and laboratory automation systems. These systems may be adapted to receive cartridges having structures that hold aliquots of a low-volume sample solution during measurement and analysis of the sample solution.

Cross-contamination of sample solutions between experiments may affect researchers' confidence in the accuracy of the measurement and analysis results. Therefore, it may be desirable to clean or decontaminate the cartridges and aliquot-contacting surfaces between uses. It may also be desirable to replace aliquot-contacting surfaces between uses to minimize the risk of cross-contamination.

The aliquot-containing structures in existing designs, however, may be fixed to the cartridge. As a result, adequately cleaning the structures may be timely and costly, and replacing the aliquot-containing structures between uses may be a cost-prohibitive option. Additionally, existing designs may include hinges or other mechanical structures that can wear out or fail thus requiring timely and costly maintenance. Hinges and other mechanical structures may also make existing designs incompatible with automated handlers such as microplate stackers that use grippers.

Therefore, a need exists for an affordable system for measuring and analyzing low-volume solution samples that reduces the risk of cross-contamination and reduces the need for maintenance.
EP 0 902 271 A2 discloses an adapter for an analysis system. The adapter has a recess for receiving a sample holder, which has an array of holes for receiving a microwell array. When the microwell array is placed within the sample holder, a flexible seal is placed on the top of the microwells in the microwell array. The seal has an adhesive on its lower surface, such that the wells can be sealed on their top side.
US 2002/0039796 A1 suggests cytology slides having a front cover and a rear cover. The rear cover has an opening for receiving a slide. On the inner surface of front cover a shallow well is placed into which an absorbent material is inserted. A filter with pores is placed on the absorbent material. When the cytology slide is closed by closing the rear cover towards the front cover the slide covers the top of the shallow well.
The sample holder of WO 2010/120249 A1 suggests a plate assembly having a holder with a recess in which a fluidic plate is placed. A cover may be provided which is placed on top of the holder wall. The cover is not placed on top of the fluidic plate and no separating member is provided at the cover or at the fluidic plate such that when the cover plate is placed on the fluidic plate the separating member provides a spacing between the fluidic plate and cover.

### SUMMARY

The invention is defined in claims 1 and 13, respectively. Particular embodiments are set out in the dependent claims.

A presentation system for a low-volume solution sample for use in an analysis system is provided. An adapter positions aliquots of the low-volume sample solution for measurement by the analysis system. The adapter includes a recess formed in an upper surface of the adapter for removable receipt of a sample holder that holds the aliquots of the low-volume sample solution. The sample holder is seated in the recess when the sample holder is inserted into the recess. The shape of the recess substantially conforms to at least a portion of the shape of the sample holder such that the recess maintains the sample holder in place during measurement of the aliquots. The recess also has a depth sufficient to receive the sample holder and a cover plate when the sample holder and the cover plate are inserted into the recess. Further features are defined in claim 1 or 13.

A method for presenting a low-volume solution sample for use in an analysis system is also provided for illustrative purposes. A sample holder is inserted into a recess formed in an upper surface of an adapter of a presentation system. The sample holder has aliquots of a low-volume sample solution and is supported in the recess of the adapter. The sample holder is positioned in the recess such that the recess maintains the sample holder in place during measurement of the aliquots by the analysis system. The presentation system is provided to the analysis system for measurement of the aliquots. The presentation system is retrieved when measurement of the aliquots is complete, and the sample holder is removed from the recess of the adapter. A replacement sample holder is inserted into the recess having aliquots of a new low-volume solution sample for a subsequent measurement of the aliquots of the new low-volume sample solution.

### BRIEF DESCRIPTION OF THE DRAWINGS

FIG. 1 is an exploded view of an example of an implementation of a presentation system.
FIG. 2 is an example of an implementation of an adapter of a presentation system.
FIG. 3 is an example of an implementation of a sample holder of a presentation system.
FIG. 4 is an example of an implementation of a cover plate of a presentation system.
FIG. 5 is an assembled view of an example of an implementation of sample holder and an example of an implementation of a cover plate.
FIG. 6 is an assembled view of the presentation system of FIG. 1.

### DETAILED DESCRIPTION

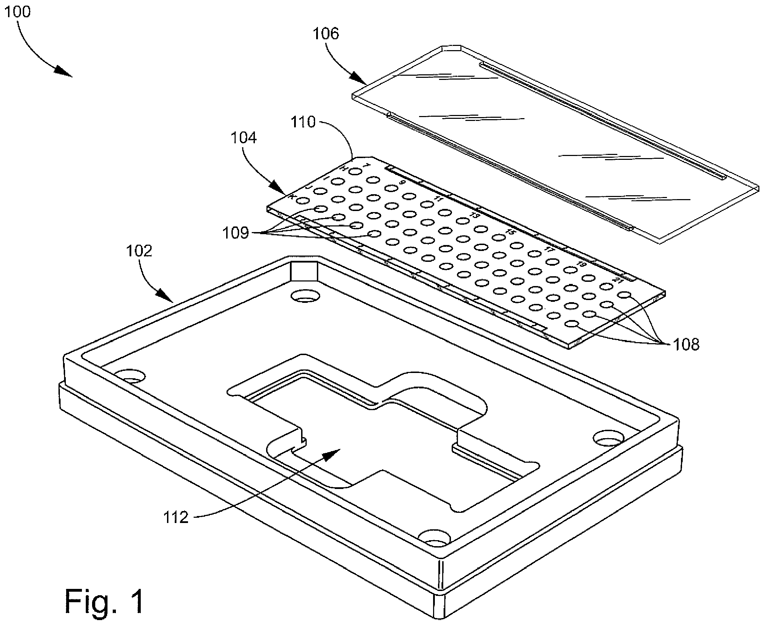

Referring to FIG. 1, an example of an implementation of a presentation system 100 for a low-volume solution sample is shown in an exploded view. The presentation system 100, in this example, includes an adapter 102, a sample holder 104, and a cover plate 106. The presentation system 100, in this example, is designed for use by analysis systems such as, for example, photometric measurement systems (not shown), which may be operated as stand-alone systems or in conjunction with laboratory robotics for automated processing. For example, the presentation system 100 may be used with Multi-Mode or Single-Mode Microplate Readers or the StakMax® Microplate Handling System, which may be available from Molecular Devices, LLC of Sunnyvale, California.

As seen in FIG. 1, the sample holder 104, in this example, includes apertures 108 that spatially constrain aliquots of a low-volume sample solution to respective exposed portions 109 of the upper surface 110 of the sample holder 104. The adapter 102 includes a recess 112 that receives the sample holder 104 and keeps the sample holder 104 in place during measurement and analysis. The cover plate 106 may be placed on top of the sample holder 104 to protect or further constrain the low-volume solution sample on the sample holder 104 (*e.g*., from evaporation or to establish an absorbance path length).

As provided below, the presentation system 100 may be used in the analysis of low volumes of solution samples. The presentation system 100 may be received by an analysis system such as, for example, a microplate reader (not shown), which may illuminate aliquots of a low-volume solution sample with a beam of light to obtain photometric measurements. A low-volume solution sample may be, for example, an aqueous solution around 2-4 microliters (µL) in volume.

The presentation system 100 positions the aliquots of the low-volume solution sample for measurement by the analysis system. For example, the presentation system 100 may position the aliquots of the low-volume solution sample in the light path of a microplate reader. In this example, the dimensions of various components of the presentation system 100 may be kept within a relatively small range of mechanical tolerances to control the placement and positioning of the aliquots for measurement by the analysis system. The particular tolerances may depend, for example, on the volume of the solution sample and the diameter of the light beam. For a low-volume solution sample around 2 µL and a light beam having a diameter around 1 mm, for example, mechanical tolerances of around ±0.1-0.2 mm may be specified.

When positioning the aliquots in the light path for a beam of light, for example, it may be desirable to use a sufficient amount of solution to cover a relatively larger area to ensure that the solution absorbs as much of the beam of light as possible. When measuring aliquots of a low-volume solution sample, however, it may be desirable to measure the individual aliquots over a relatively smaller area. As seen, presentation system 100 controls the placement and positioning of the aliquots of the low-volume solution sample such that, for example, the aliquots cover a minimal amount of surface area while absorbing a maximal amount of light.

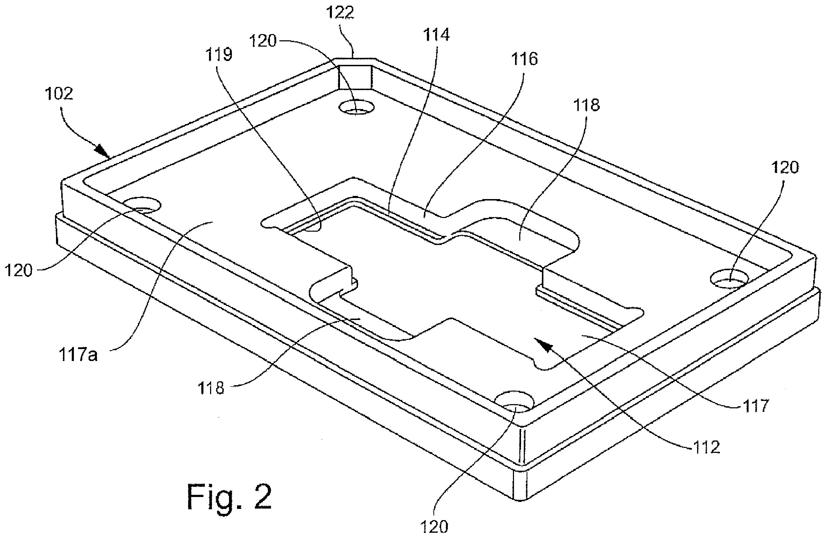

Referring to FIG. 2, an example of an implementation of an adapter 102 of a presentation system 100 is shown. Analysis systems (*e.g*., photometric measurement systems) may be configured to receive standardized microtiter plates ("microplates"), *e.g.*, microplates conforming in pertinent respects to ANSI/SBS (American National Standards Institute/Society for Biomolecular Sciences) standards 1-2004 through 4-2004. Accordingly, the adapter 102 may have a microplate-like shape. The adapter 102, in this example, has a rectangular microplate-like shape and may have dimensions around 127.8 mm long, 85.5 mm wide, and 14.4 mm thick.

The adapter 102 includes a recess 112 that may receive a sample holder 104 (FIG. 1). The recess 112 that receives the sample holder 104 may have a shape similar to the sample holder 104 and dimensions similar to the sample holder 104 so that the recess 112 may keep the sample holder 104 in place during measurement and analysis of the low-volume solution sample. In this example, the recess 112 of the adapter 102 has a rectangular shape (similar to that of a microscope slide) and may have dimensions around 76.1 mm long and 25.1 mm wide.

The recess 112 of the adapter 102, in this example, also includes a lip 114 attached to the inner wall 116 that defines the shape of the recess 112. When a sample holder 104 is inserted into the recess 112 of the adapter 102, the sample holder 104 may rest on the lip 114 around the perimeter of the recess 112. Additionally, the adapter 102, in this example, includes one or more (in the illustrated example, two) recesses 118 adjacent to the recess 112 that receives the sample holder 104. The adjacent recesses 118, in this example, may receive the fingers of a researcher or robotic slide handler when placing the sample holder 104 into or removing the sample holder 104 from the adapter 102.

The recess 112 of the adapter 102 may have a predetermined depth sufficient to receive both the sample holder 104 and the cover plate 106 when the sample holder 104 and the cover plate 106 are inserted into the recess 112. The depth of the recess 112 may also be sufficient to support the sample holder 104, for example, at an optimal height in a light path of a beam of light from a microplate reader. As mentioned above, a microplate reader may illuminate the aliquots of the sample holder 104 in order to obtain photometric measurements. The microplate reader may illuminate the aliquots of the low-volume sample solution with a beam of light that narrows as the light approaches the sample holder (*i.e.*, a narrowing cone of light) and expands after the beam of light passes through the aliquots (*i.e.*, an expanding cone of light). In this example, the recess 112 of the adapter 102 may have a depth sufficient to position the sample holder 104 at the narrowest portion of the beam of light.

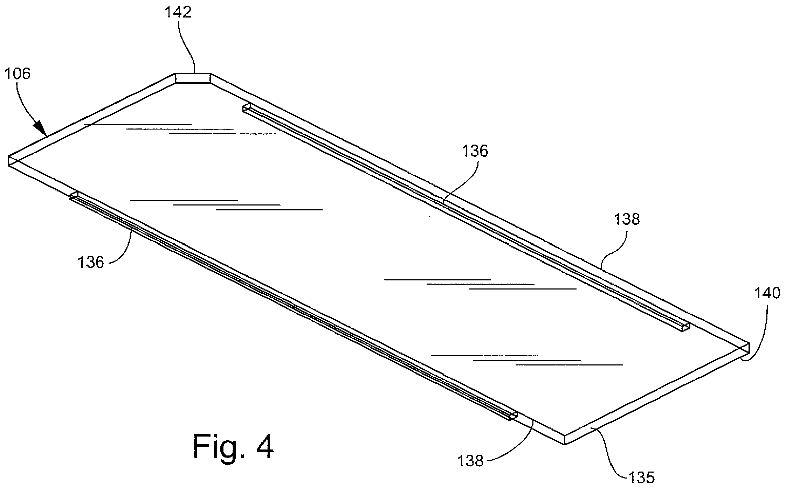

As an example, the depth of the recess 112 may be sufficient to receive a sample holder 104 around 1 mm thick, a separating member (FIG. 4) around 1 mm thick, and at least the bottom portion of a cover plate 106 around 1 mm thick. To position the aliquots of the low-volume solution sample at an optimal height in the light path, the height of the lip 114 from the bottom surface 119 of the adapter 102, may be around 6.3 mm. Mechanical tolerances for the dimensions may depend on the expected angle of the cone of light or an x-y margin of error and may be, for example, around ± 0.3 mm.

In this example, the adapter 102 also includes an opening 117 formed in the lower surface 119 of the adapter 102. The opening 117, in this example, conforms to the size, shape, and position of the recess 112. Accordingly, when the sample holder 104 is seated in the recess 112 of the adapter 102, the adapter 102 does not obstruct a beam of light that illuminates the aliquots of the low-volume solution sample held by the sample holder 104 when obtaining photometric measurements.

The adapter 102 may also include one or more alignment bores 120 for mechanical alignment of the adapter 102 at the analysis system. In this example, the adapter 102 includes four circular alignment bores 120 formed in the upper surface 117a of the adapter 102 and respectively positioned near each of the corners of the adapter 102. The adapter 102 may also include a chamfered corner 122 to ensure proper orientation of the adapter 102 when placing the adapter 102 in or at an analysis system. The chamfered corner 122 of the adapter 102 may physically prevent the adapter 102 from being inserted at the analysis system in an incorrect orientation.

The adapter 102, in this example, has a solid construction and may be made of any dimensionally stable material. For example, the adapter 102 may be constructed from a tempered aluminum alloy such as, for example, 6061-T6 aluminum alloy and may include an anodized finish.

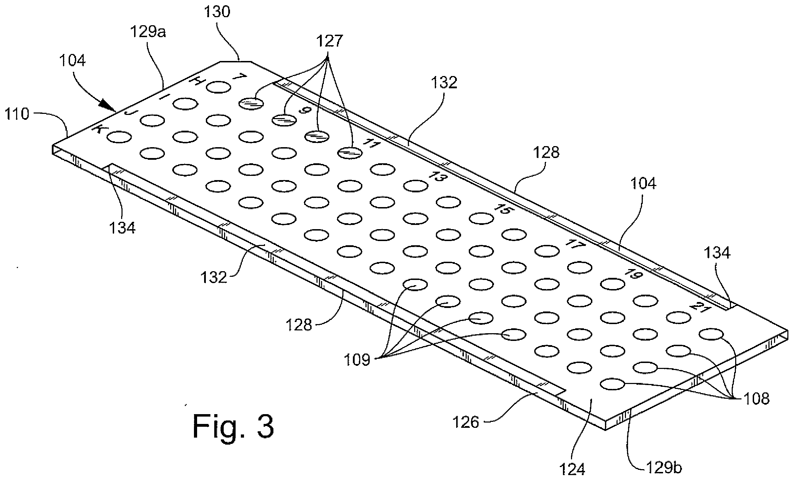

Referring now to FIG. 3, an example of an implementation of a sample holder 104 is shown. In this example, the sample holder 104 includes a patterned coating 124 that is applied to a substrate 126. The sample holder 104, in the example shown, spatially constrains aliquots 127 of a low-volume solution sample on the substrate 126. The sample holder 104 has a shape that conforms to the shape of the recess 112 in the adapter 102 (FIG. 2). In the example shown, the sample holder 104 has a rectangular shape (similar to a microscope slide) that conforms to the rectangular shape of the recess 112 for in the adapter 112. The sample holder 104 also has a size that corresponds to the size of the recess 112 in the adapter 102. In this example, the sample holder 104 may have dimensions around 76 mm long, 25 mm wide, and 1 mm thick.

The patterned coating 124 includes multiple apertures 108 that expose respective portions 109 of the upper surface 110 of the substrate 126. The apertures 108 in the patterned coating 124 also function to robustly position aliquots 127 of the low-volume solution sample for measurement by the analysis system. The apertures 108, in this example, spatially constrain the aliquots 127 of the low-volume solution sample to respective exposed portions 109 of the upper surface 110 of the substrate 126. In the example shown in FIG. 3, the apertures 108 of the patterned coating 124 are circular in shape and are arranged in a rectangular pattern of four rows and sixteen columns for a total of sixty-four apertures 108 that spatially constrain aliquots 127 of a low-volume sample solution applied to the sample holder 104. The number, shape, and pattern of the apertures 108 may depend on the analysis system in which the sample holder 104 is used. Accordingly, an alternative number, shape (*e.g.*, rectangular), and pattern for the apertures 108 may be selectively employed.

In some example implementations, the centers of the apertures 108 of the patterned coating 124 may be separated by around 9 mm to correspond to the layout of a standard 96-well microplate. In other example implementations, the centers of the apertures 108 of the patterned coating 124 may be separated by around 4.5 mm to correspond to the layout of a 384-well microplate. In this way, the sample holders 104 are compatible with standard laboratory tools such as multi-channel pipettes and the like.

The size, shape, and positioning of the apertures 108 may determine where the aliquots 127 are positioned for measurement by the analysis system. In the example sample holder 104 shown in FIG. 3, the sample holder 104 includes sixty-four total apertures 108 arranged in four rows of sixteen columns each. In this example, to robustly position the aliquots 127 of the low-volume solution sample for measurement by the analysis system, the apertures 108 may be circular in shape and around 2.25 mm in diameter. Additionally in this example, the centers of the apertures 108 in the top row and bottom row may be located around 5.75 mm from the respective longitudinal edges 128 of the substrate 126; the centers of the apertures 108 in the left column and right column may be located around 3.75 mm and 4.75 mm from the left side edge 129a and right side edge 129b respectively; and the centers of the apertures 108 may be spaced apart from each other at a distance of around 4.5 mm. It will be understood that these dimensions are by way of example only and that other dimensions suitable to robustly position the aliquots 127 of the low-volume solution sample for measurement by the analysis system may be selectively employed.

The patterned coating 124 may be made of any material suitable to constrain an aqueous solution for measurement and analysis by an analysis system (*e.g*., photometric or laboratory automation systems). For example, the patterned coating 124 may be made of materials that are hydrophobic and chemically inert such that the material does not contribute significant contamination to the low-volume solution sample. A fluoropolymer is one example of a material that may be employed for the patterned coating 124 of the sample holder 104.

The patterned coating 124 may be applied to the surface 110 of the substrate 126 of the sample holder 104. The substrate 126 may be made of any dimensionally stable material. The particular material for the substrate 126 may also depend on the type of analysis system in which the sample holder 104 is used. Because the sample holder 104, in this example, is used in photometric measurement systems, light-transmissive materials and materials that do not emit light-such as, for example, glass or plastic-may be selectively employed as the material for the substrate 126 of the sample holder 104. Fluorescence-grade fused silica may be used where a photometric measurement system performs fluorescence measurements since fused silica does not auto-fluoresce and is transparent over a broad range of light wavelengths extending from UV (ultraviolet) through visible to IR (infrared).

The sample holder 104 may also include a chamfered corner 130 to indicate the proper orientation of the sample holder 104 when inserting the sample holder 104 into the recess 112 of the adapter 102. The chamfered corner 130 of the sample holder 104 may likewise physically prevent the sample holder 104 from being inserted into the recess 112 of the adapter 102 in an incorrect orientation.

As discussed further below in reference to FIG. 4, a cover plate 106 may be placed over the sample holder 104 to protect the low-volume solution sample during measurement and analysis. The sample holder 104 may be designed such that the cover plate 106 does not interfere with the low-volume solution sample when the cover plate 106 covers the sample holder 104. For example, the sample holder 104, in this example, includes one or more (in the illustrated example, two) two contact regions 132 on the surface 110 of the substrate 126. The patterned coating 124 includes one or more corresponding (in the illustrated example, two) longitudinal notches 134 along the longitudinal edges 128 of the sample holder 104 reveal the contact regions 132 on the surface 110 of the substrate 126 of the sample holder 104. Accordingly, one or more separating members (FIG. 4) of a cover plate 106 may rest on the contact region(s) 132 of the sample holder 104 when the cover plate 106 is placed onto the sample holder 104. Additional or alternative areas of the sample holder 104 may be selectively designated as contact regions 132 for the separating members (FIG. 4) of a cover plate 106.

Referring now to FIG. 4, an example of an implementation of a cover plate 106 for a sample holder 104 (FIG. 3) is shown. As discussed above, the cover plate 106 may be placed onto the sample holder 104 to protect the low-volume solution sample applied to the surface 110 of the sample holder 104. The cover plate 106 may include a substrate 135 and one or more (in the illustrated example, two) separating members 136.

The substrate 135 for the cover plate 106 may also be made of any dimensionally stable material. The material for the substrate 135 of the cover plate 106 may likewise depend on the type of analysis system in which the cover plate 106 is used. Because the sample holders 104, in this example, are used with photometric measurement systems, the substrate 135 may be made of a transparent material such as, for example, quartz glass. In some example embodiments, the cover plate 106 may match the shape (*e.g.,* rectangular) and size (*e.g.* 76 mm long, 25 mm wide, and 1 mm thick) of the sample holder 104.

The cover plate 106 may include one or more (in the illustrated example, two) separating members 136, *i.e.,* separators, which rest on the upper surface 110 of the substrate 126 of the sample holder 104 and separate the cover plate 106 from the sample holder 104 at a particular distance. In the example shown, the separators 136 of the cover plate 106 are longitudinal separators 136 along the respective longitudinal edges 138 of the cover plate 106. The separators 136, in this example, match the contact regions 132 of the sample holder 104 of FIG. 3. Accordingly, the longitudinal separators 136 of the cover plate 106, in this example, may rest on the surface 110 of the sample holder substrate 126 in the longitudinal notches 134 of the patterned coating 124 of the sample holder 104 shown in FIG. 3. Additional or alternative shapes for the separators 136 that do not interfere with the low-volume solution sample may be selectively employed.

The separators 136 may be attached (e.g., fused) to the lower surface 140 of the cover plate 106 as shown by way of example in FIG. 4. In alternative embodiments for the presentation system 100 (FIG. 1), the sample holder 104 may include the separators 136 rather than the cover plate 106. In these alternative embodiments, the separators 106 may be attached (*e.g.,* fused) to the upper surface 110 of the substrate 126 of the sample holder 104, and the cover plate 106 may rest on the separators 136 of the sample holder 104 when the cover plate 106 covers the sample holder 104.

The separators 136 may vary in size. For example, the separators 136 may be 0.5 mm thick, 1 mm thick, etc. The separators 136 of the cover plate 106 may also be color-coded to provide a visual indicator of the thickness of the separators 136 thus making cover plates 106 having separators 136 of different thicknesses easily distinguishable and identifiable. For example, a transparent color may indicate a 0.5 mm separator thickness, and a white color may indicate a 1 mm separator thickness. In some example implementations, the separators 136 of the cover plate 106 may function to establish a path length for absorbance measurements. Like the adapter 102 and sample holder 104, the cover plate 106, in this example, may also include a chamfered corner 142 to ensure proper orientation of the cover plate 106 when the cover plate 106 is placed onto the sample holder 104. Like the chamfered corner 130 of the sample holder 104, the chamfered corner 142 of the cover plate 106 may physically prevent the cover plate 106 from being inserted into the recess 112 of the adapter 102 in an incorrect orientation.

Regarding the absorption path length, a suitable signal-to-noise ratio may be achieved when measuring absorbance of the low-volume solution sample with an absorption path length of, for example, around 0.5 mm. As an example, if the low-volume solution sample is around 2 µL in volume, then an absorption path length of around 0.5 mm may be achieved with apertures 108 (FIG. 3) having a diameter of around, for example, 2.26 mm. In this example, the beam of light may have a diameter of around 1.0 mm, and the mechanical variance for the placement of the aliquots 127 (FIG. 3) in the light path or variance in the diameter of the beam of light may be around ± 0.06 mm to tolerate positional variances in the analysis system that may result from calibration errors or mechanical repeatability limits.

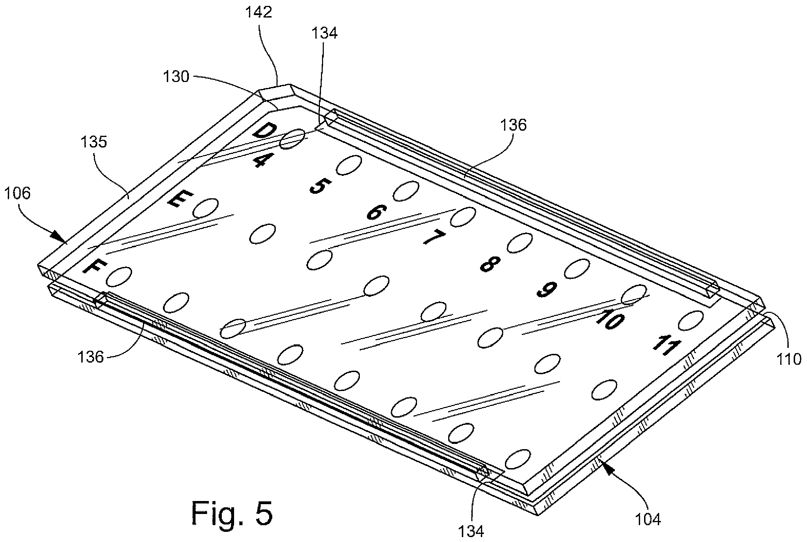

Referring now to FIG. 5, a cover plate 106 is shown positioned on a sample holder 104. As seen in FIG. 5, the cover plate 106 is aligned with the sample holder 104 such that the cover plate 106 is substantially parallel to the sample holder 104. The chamfered corners 130 and 142 of the sample holder 104 and cover plate 106 are respectively aligned in the example shown. The separators 136 of the cover plate 106 are resting on the upper surface 110 of the substrate 126 of the sample holder 104 in the notches 134 of the pattered coating 124.

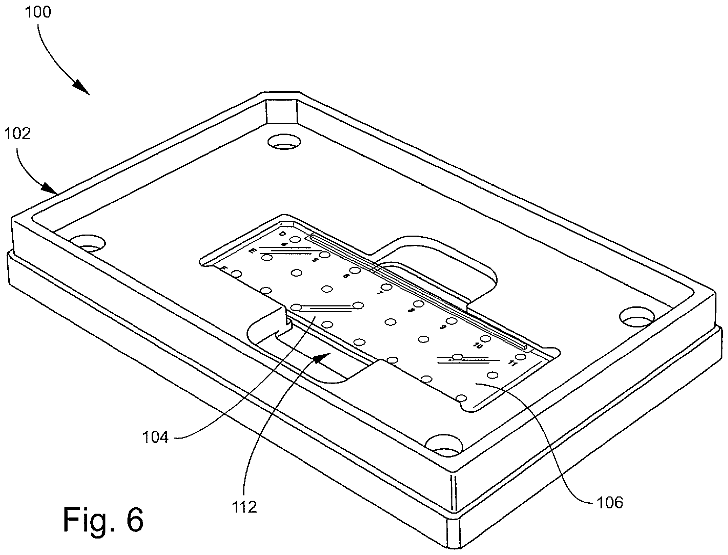

The sample holder 104 and the cover plate 106 may be placed into the recess 112 of the adapter 102 as shown by way of example in FIG. 6. As seen in FIG. 6, the sample holder 104 and cover plate 106 fit snugly in the recess 112 of the adapter 102. Accordingly, the adapter 102 keeps the sample holder 104 and cover plate 106 in place during measurement and analysis.

The presentation system 100 described improves measurement and analysis of low-volume solution samples. Because the adapter 102, in this example, has a solid construction and does not include mechanical structures (*e.g*., hinged structures) that may wear out, the time and cost associated with maintenance is reduced thereby advantageously increasing the throughput of the analysis systems. Because the adapter 102, in this example, does not include hinged structures or other like mechanical structures, the adapter 102 minimizes the time and cost of servicing the presentation system 100. Furthermore, because the adapter 102, in this example, has a solid construction, it is suitable for use with robotic microplate handlers.

Additionally, because the sample holders 104, in this example, may be constructed of a low-cost material, replacement of the sample holders 104 between uses is an affordable option. The relatively high-cost adapter 102 may be reused while advantageously replacing the relatively low-cost sample holders 104. Moreover, replacing the sample holders 104 between uses advantageously reduces the risk of cross-contamination thereby improving the confidence of the measurement and analysis results. Additionally, the size and shape of the adapter 102 of the presentation system 100, in this example, conforms to the ANSI/SBS standardized microplate dimensions. Accordingly, the presentation system 100 is suitable for use with existing analysis systems, in particular, automated systems having robotic components designed to transport microplates conforming to the standardized dimensions.

In an example method of use, a user may place the adapter 102 of the presentation system 100 in an analysis system and insert the sample holder 104 into the recess 112 of the adapter 102. The user may then apply a low-volume solution sample to a sample holder 104. The patterned coating 124 on the sample holder 104 will spatially constrain aliquots of the low-volume sample solution to the exposed portions 109 of the substrate 126 of the sample holder 104. The recess 112 of the adapter 102 may conform to the size and shape of the sample holder 104 so as to provide a snug fit for the sample holder 104 when the sample holder 104 is seated in the recess 112.

The recess 112 of the adapter 102 may have a depth sufficient to also receive a cover plate 106 to protect the sample holder 104 when the sample holder 104 is seated in the recess 112 of the adapter 102. Accordingly, the user may also insert a cover plate 106 into the recess 112 of the adapter 102 to protect the sample holder 104 during the measurement process. The recesses 118 adjacent to the recess 112 for the sample holder 104 and cover plate 106 permit access of the fingers of the user (or a robotic slide handler) as the user (or robotic slide handler) inserts the sample holder 104 and cover plate 106 into the recess 112 of the adapter 102. In this way, the adjacent recesses 118 provide a convenient pathway for the fingers of the user or a robotic slide handler.

Once the presentation system 100 has been inserted into the analysis system, the analysis system may obtain various measurements (*e.g*., photometric measurements) of the aliquots of the low-volume solution sample held by the sample holder 104 of the presentation system 100. After the measurement process is complete, the user may retrieve the presentation system 100 from the analysis system. The user may remove the cover plate 106 and sample holder 104 from the adapter 102. The user may clean the sample holder 104 and cover plate 106 to remove the analyzed low-volume solution sample. Cleaning methods such as immersion or sonication may be used where there is risk of cross-contamination; where there is minimal risk of cross-contamination, the user may wipe dry the sample holder 104 before dispensing the next batch of aliquots on the sample holder 104. After the user has cleaned to sample holder 104 and cover plate 106, the user may reassemble the presentation system 100 for a subsequent analysis with a new low-volume solution sample.

The presentation system 100 may be used in a manual fashion as described above or in an automated fashion. The analysis system may include automated material handlers to automatically process multiple presentation systems 100 in a queue (*i.e*., batch processing). When measurement of the aliquots in one presentation system 100 is complete, the automated handlers may automatically remove the presentation system 100 from the analysis system and automatically replace the presentation system 100 with the next presentation system 100 in the queue. Accordingly, in some example methods of use, the user may prepare multiple presentation systems 100 each having a respective low-volume solution sample from a batch of low-volume solution samples. The user may arrange the multiple presentation systems 100 to form a queue of presentation systems 100. The user may then load the multiple presentation systems 100 into a plate handling robot for automatic analysis of the low-volume solution samples in each respective presentation system 100. The presentation system 100, in this example, is designed to fit into the drawer of, for example, a microplate reader, which allows for this type of sequential batch processing.

The foregoing description of implementations has been presented for purposes of illustration and description. It is not exhaustive and does not limit the claimed inventions to the precise form disclosed. Modifications and variations are possible in light of the above description or may be acquired from practicing the invention. The claims and their equivalents define the scope of the invention.

## Claims

1. A presentation system (100) for a solution sample for use in an analysis system comprising:
an adapter (102) configured for positioning aliquots (127) of the solution for measurement by the analysis system, and
a sample holder (104);
wherein the adapter (102) includes a recess (112) formed in an upper surface (117a) of the adapter for removable receipt of the sample holder (104) that holds the aliquots (127) of the solution sample such that the sample holder (104) is seated in the recess (112) when the sample holder is inserted into the recess;
the recess (112) having a shape that conforms to at least a portion of a shape of the sample holder (104) such that the recess maintains the sample holder in place during measurement of the aliquots (127); and
the recess (112) having a predetermined depth sufficient to receive the sample holder (104) and a cover plate (106) when the sample holder and the cover plate are inserted into the recess;
**characterized in that**
the cover plate (106) comprises a separating member (136) attached to a lower surface of a substrate (135),
wherein, when the sample holder (104) and the cover plate (106) are seated in the recess (112) of the adapter (102), the separating member (136) rests upon an upper surface (110) of the sample holder (104) to separate the cover plate from the sample holder at a predetermined distance.

2. The presentation system of claim 1, wherein the shape of the recess (112) is defined by an inner wall (116) in the adapter (102), the inner wall (116) comprising a lip (114) formed along a perimeter of the inner wall and extending from the inner wall such that the lip supports the sample holder (104) when the sample holder is seated in the recess.

3. The presentation system of claim 2, wherein edge portions of the sample holder (104) rest upon the lip (114) formed along the perimeter of the inner wall (116) of the recess (112) when the sample holder (104) is seated in the recess and supported by the lip.

4. The presentation system of claim 1, 2 or 3, further comprising a recess (118) formed in the upper surface (117a) of the adapter (102) adjacent to and contiguous with the recess (112) for removable receipt of the sample holder (104) to provide access to sides of the sample holder when the sample holder is inserted into or removed from the recess.

5. The presentation system of claim 1, wherein:
the sample holder (104) includes a contact region (132) on the upper surface (110) of the sample holder; and
when the separating member is resting upon the upper surface of the sample holder, the separating member (136) of the cover plate (106) is resting within the contact region (132).

6. The presentation system of claim 5, wherein:
the separating member (136) of the cover plate (106) is an elongated beam positioned proximate to a longitudinal edge portion of the cover plate; and
the at least two contact regions (132) of the sample holder (104) are at least two elongated portions of the upper surface (110) of the substrate (126) of the sample holder positioned proximate to longitudinal edge portion of the sample holder.

7. The presentation system of any of the previous claims, further comprising an opening (117) formed in a lower surface of the adapter (102) to allow a beam of light to illuminate the sample solution held by the sample holder (104).

8. The presentation system of claim 7, wherein the opening (117) formed in the lower surface of the adapter (102) conforms to the size, shape, and position of the recess (112) for removable receipt of the sample holder (104).

9. The presentation system of any of the previous claims, further comprising an alignment bore (120) formed in the upper surface (117a) of the adapter (102) and positioned proximate to a corner of the adapter to provide alignment of the adapter when positioned in the analysis system.

10. The presentation system of any of the previous claims, wherein:
the sample holder (104) includes a patterned coating (124) applied to a substrate (126);
a plurality of apertures (108) are formed in the patterned coating (124) that correspond to a plurality of exposed portions of the substrate (126); and
the patterned coating (124) is configured for spatially constraining individual aliquots (127) of the solution sample to individual exposed portions of the substrate such that the aliquots are positioned for measurement by the analysis system.

11. The presentation system of claim 10, wherein:
a size of an individual aperture in the plurality of apertures (108) minimizes a size of an individual exposed portion of the substrate (126) that corresponds to the individual aperture; and
the size of the individual aperture maximizes the amount of light absorbed by an individual aliquot (127) of the solution sample constrained by the patterned coating (124) to the individual exposed portion of the substrate (126).

12. Arrangement comprising an analysis system and a presentation system of any of the previous claims, wherein:
the analysis system comprises a light path for a beam of light projected by the analysis system;
the sample holder (104) holds aliquots (127) of the solution sample;
the adapter (102) is configured for positioning the sample holder (104) such that the aliquots (127) of the solution sample are respectively positioned in the light path such that an amount of light is absorbed by the aliquots; and
the recess (112) is configured for positioning the sample holder (104) at a predetermined height such that the aliquots (127) of the sample solution are positioned proximate to a narrow portion of the beam of light.

13. A presentation system (100) for a solution sample for use in an analysis system comprising:
an adapter (102) configured for positioning aliquots (127) of the solution for measurement by the analysis system, and
a sample holder (104);
wherein the adapter (102) includes a recess (112) formed in an upper surface (117a) of the adapter for removable receipt of the sample holder (104) that holds the aliquots (127) of the solution sample such that the sample holder (104) is seated in the recess (112) when the sample holder is inserted into the recess;
the recess (112) having a shape that conforms to at least a portion of a shape of the sample holder (104) such that the recess maintains the sample holder in place during measurement of the aliquots (127); and
the recess (112) having a predetermined depth sufficient to receive the sample holder (104) and a cover plate (106) when the sample holder and the cover plate are inserted into the recess; **characterized in that**
the sample holder (104) comprises a separating member attached to an upper surface (110) of the sample holder, and the cover plate (106) rests upon the separating member wherein the cover plate is separated from the sample holder at a predetermined distance when the sample holder and the cover plate are seated in the recess (112) of the adapter (102).

## Patentansprüche

1. Ein Präsentationssystem (100) für eine Lösungsprobe zur Verwendung in einem Analysesystem, das aufweist:
einen Adapter (102), der zum Positionieren von Aliquoten (127) der Lösung zur Messung durch das Analysesystem ausgelegt ist, und
einen Probenhalter (104);
wobei der Adapter (102) eine Aussparung (112) umfasst, die auf einer Oberseite (117a) des Adapters ausgebildet ist, für die entnehmbare Aufnahme des Probenhalters (104), der die Aliquoten (127) der Lösungsprobe hält, so dass der Probenhalter (104) in der Aussparung (112) sitzt, wenn der Probenhalter in die Aussparung eingesetzt wird;
wobei die Aussparung (112) eine Form hat, die zumindest einem Teil einer Form des Probenhalters (104) entspricht, so dass die Aussparung den Probenhalter während der Messung der Aliquoten (127) in Position hält; und
wobei die Aussparung (112) eine vorbestimmte Tiefe hat, die ausreicht, um den Probenhalter (104) und eine Abdeckplatte (106) aufzunehmen, wenn der Probenhalter und die Abdeckplatte in die Aussparung eingesetzt sind;
**dadurch gekennzeichnet, dass**
die Abdeckplatte (106) ein Trennelement (136) aufweist, das an einer Unterseite eines Substrats (135) befestigt ist,
wobei, wenn der Probenhalter (104) und die Abdeckplatte (106) in der Aussparung (112) des Adapters (102) sitzen, das Trennelement (136) auf einer Oberseite (110) des Probenhalters (104) ruht, um die Abdeckplatte vom Probenhalter um einen vorbestimmten Abstand zu trennen.

2. Das Präsentationssystem nach Anspruch 1, wobei die Form der Aussparung (112) durch eine Innenwand (116) im Adapter (102) definiert ist, wobei die Innenwand (116) eine Lippe (114) aufweist, die entlang eines Umfangs der Innenwand ausgebildet ist und sich von der Innenwand erstreckt, so dass die Lippe den Probenhalter (104) abstützt, wenn der Probenhalter in der Aussparung sitzt.

3. Das Präsentationssystem nach Anspruch 2, wobei Kantenteile des Probenhalters (104) auf der Lippe (114) ruhen, die entlang des Umfangs der Innenwand (116) der Aussparung (112) ausgebildet ist, wenn der Probenhalter (104) in der Aussparung sitzt ist und durch die Lippe abgestützt ist.

4. Das Präsentationssystem nach Anspruch 1, 2 oder 3, das ferner eine Aussparung (118) aufweist, die auf der Oberseite (117a) des Adapters (102) benachbart zu und angrenzend an die Aussparung (112) zur entnehmbaren Aufnahme des Probenhalters (104) ausgebildet ist, um Zugang zu Seiten des Probenhalters zu schaffen, wenn der Probenhalter in die Aussparung eingesetzt oder aus dieser entnommen wird.

5. Das Präsentationssystem nach Anspruch 1, wobei:
der Probenhalter (104) einen Kontaktbereich (132) an der Oberseite (110) des Probenhalters umfasst; und
wenn das Trennelement auf der Oberseite des Probenhalters ruht, das Trennelement (136) der Abdeckplatte (106) innerhalb des Kontaktbereichs (132) liegt.

6. Das Präsentationssystem nach Anspruch 5, wobei:
das Trennelement (136) der Abdeckplatte (106) ein länglicher Balken ist, der nahe einem Längskantenteil der Abdeckplatte angeordnet ist; und
die mindestens zwei Kontaktbereiche (132) des Probenhalters (104) mindestens zwei längliche Teile der Oberseite (110) des Substrats (126) des Probenhalters sind, die nahe einem Längskantenteil des Probenhalters angeordnet sind.

7. Das Präsentationssystem nach einem der vorangehenden Ansprüche, das ferner eine Öffnung (117) aufweist, die an einer Unterseite des Adapters (102) ausgebildet ist, um zu ermöglichen, dass ein Lichtstrahl die Probenlösung, die durch den Probenhalter (104) gehalten wird, beleuchtet.

8. Das Präsentationssystem nach Anspruch 7, wobei die Öffnung (117), die an der Unterseite des Adapters (102) ausgebildet ist, der Größe, Form und Position der Aussparung (112) für die entnehmbare Aufnahme des Probenhalters (104) entspricht.

9. Das Präsentationssystem nach einem der vorangehenden Ansprüche, das ferner eine Ausrichtbohrung (120) aufweist, die an der Oberseite (117a) des Adapters (102) ausgebildet ist und nahe einer Ecke des Adapters angeordnet ist, um eine Ausrichtung des Adapters zu schaffen, wenn er im Analysesystem positioniert wird.

10. Das Präsentationssystem nach einem der vorangehenden Ansprüche, wobei:
der Probenhalter (104) eine gemusterte Beschichtung (124) umfasst, die auf ein Substrat (126) aufgebracht ist;
eine Vielzahl von Öffnungen (108) in der gemusterten Beschichtung (124) ausgebildet sind, die einer Vielzahl von freigelegten Teilen des Substrats (126) entsprechen; und
die gemusterte Beschichtung (124) zum räumlichen Einschränken von individuellen Aliquoten (127) der Lösungsprobe auf individuelle freigelegte Teile des Substrats ausgelegt ist, so dass die Aliquoten zur Messung durch das Analysesystem positioniert werden.

11. Das Präsentationssystem nach Anspruch 10, wobei:
eine Größe einer individuellen Öffnung aus der Vielzahl von Öffnungen (108) eine Größe eines individuellen freigelegten Teils des Substrats (126) minimiert, der der individuellen Öffnung entspricht; und
die Größe der individuellen Öffnung die Menge an Licht maximiert, das durch einen individuellen Aliquoten (127) der Lösungsprobe absorbiert wird, die durch die gemusterte Beschichtung (124) auf den individuellen freigelegten Teil des Substrats (126) eingeschränkt wird.

12. Anordnung mit einem Analysesystem und einem Präsentationssystem nach einem der vorangehenden Ansprüche, wobei:
das Analysesystem einen Lichtweg für einen Lichtstrahl aufweist, der durch das Analysesystem projiziert wird;
der Probenhalter (104) Aliquote (127) der Lösungsprobe hält;
der Adapter (102) zum Positionieren des Probenhalters (104) ausgelegt ist, so dass die Aliquoten (127) der Lösungsprobe jeweils im Lichtweg positioniert werden, so dass eine Menge an Licht durch die Aliquoten absorbiert wird; und
die Aussparung (112) zum Positionieren des Probenhalters (104) in einer vorbestimmten Höhe ausgelegt ist, so dass die Aliquoten (127) der Probenlösung nahe einem schmalen Teil des Lichtstrahls positioniert sind.

13. Ein Präsentationssystem (100) für eine Lösungsprobe zur Verwendung in einem Analysesystem, das aufweist:
einen Adapter (102), der zum Positionieren von Aliquoten (127) der Lösung zur Messung durch das Analysesystem ausgelegt ist, und
einen Probenhalter (104);
wobei der Adapter (102) eine Aussparung (112) umfasst, die auf einer Oberseite (117a) des Adapters ausgebildet ist, zur entnehmbaren Aufnahme des Probenhalters (104), der die Aliquoten (127) der Lösungsprobe hält, so dass der Probenhalter (104) in der Aussparung (112) sitzt, wenn der Probenhalter in die Aussparung eingesetzt wird;
wobei die Aussparung (112) eine Form hat, die zumindest einem Teil einer Form des Probenhalters (104) entspricht, so dass die Aussparung den Probenhalter während der Messung der Aliquoten (127) in Position hält; und
die Aussparung (112) eine vorbestimmte Tiefe hat, die ausreicht, um den Probenhalter (104) und eine Abdeckplatte (106) aufzunehmen, wenn der Probenhalter und die Abdeckplatte in die Aussparung eingesetzt sind;
**dadurch gekennzeichnet, dass**
der Probenhalter (104) ein Trennelement aufweist, das an einer Oberseite (110) des Probenhalters befestigt ist, und die Abdeckplatte (106) auf dem Trennelement ruht, wobei die Abdeckplatte vom Probenhalter um einen vorbestimmten Abstand getrennt ist, wenn der Probenhalter und die Abdeckplatte in der Aussparung (112) des Adapters (102) sitzen.

## Revendications

1. Système de présentation (100) pour un échantillon de solution pour une utilisation dans un système d'analyse, comprenant :
un adaptateur (102), configuré pour positionner des aliquotes (127) de la solution pour la mesure par le système d'analyse, et
un porte-échantillons (104) ;
dans lequel l'adaptateur (102) comprend un renfoncement (112) formé dans une surface supérieure (117a) de l'adaptateur pour recevoir d'une manière amovible le porte-échantillons (104) qui porte les aliquotes (127) de l'échantillon de solution, de telle sorte que le porte-échantillons (104) soit logé dans le renfoncement (112) quand le porte-échantillons est inséré dans le renfoncement ;
le renfoncement (112) ayant une forme qui épouse au moins une portion d'une forme du porte-échantillons (104) de telle sorte que le renfoncement maintienne le porte-échantillons en place pendant la mesure des aliquotes (127) ; et
le renfoncement (112) ayant une profondeur prédéterminée, suffisante pour recevoir le porte-échantillons (104) et une plaque de couverture (106) quand le porte-échantillons et la plaque de couverture sont insérés dans le renfoncement ;
**caractérisé en ce que**
la plaque de couverture (106) comprend un élément séparateur (136) fixé à une surface inférieure d'un substrat (135),
dans laquelle, quand le porte-échantillons (104) et la plaque de couverture (106) sont logés dans le renfoncement (112) de l'adaptateur (102), l'élément séparateur (136) repose sur une surface supérieure (110) du porte-échantillons (104), pour séparer selon une distance prédéterminée la plaque de couverture du porte-échantillons.

2. Système de présentation selon la revendication 1, dans lequel la forme du renfoncement (112) est définie par une paroi intérieure (116) dans l'adaptateur (102), la paroi intérieure (116) comprenant une lèvre (114) formée le long d'un périmètre de la paroi intérieure et s'étendant à partir de la paroi intérieure de telle sorte que la lèvre soutienne le porte-échantillons (104) quand le porte-échantillons est logé dans le renfoncement.

3. Système de présentation selon la revendication 2, dans lequel des portions de bord du porte-échantillons (104) reposent sur la lèvre (114) formée le long du périmètre de la paroi intérieure (116) du renfoncement (112) quand le porte-échantillons (104) est logé dans le renfoncement et soutenu par la lèvre.

4. Système de présentation selon la revendication 1, 2 ou 3, qui comprend en outre un renfoncement (118) formé dans la surface supérieure (117a) de l'adaptateur (102), adjacent et contigu au renfoncement (112), pour recevoir d'une manière amovible le porte-échantillons (104), pour assurer un accès aux faces du porte-échantillons quand le porte-échantillons est inséré dans le renfoncement ou en est enlevé.

5. Système de présentation selon la revendication 1, dans lequel
le porte-échantillons (104) comprend une région de contact (132) sur la surface supérieure (110) du porte-échantillons ; et
quand l'élément séparateur repose sur la surface supérieure du porte-échantillons, l'élément séparateur (136) de la plaque de couverture (106) repose à l'intérieur de la région de contact (132).

6. Système de présentation selon la revendication 5, dans lequel
l'élément séparateur (136) de la plaque de couverture (106) est un longeron allongé, positionné au voisinage immédiat d'une portion de bord longitudinal de la plaque de couverture ; et
les au moins deux régions de contact (132) du porte-échantillons (104) sont au moins deux portions allongées de la surface supérieure (110) du substrat (126) du porte-échantillons, positionnées au voisinage immédiat de la portion de bord longitudinal du porte-échantillons.

7. Système de présentation selon l'une quelconque des revendications précédentes, comprenant en outre une ouverture (117) formée dans une surface inférieure de l'adaptateur (102) pour permettre à un faisceau lumineux d'éclairer la solution échantillon maintenue par le porte-échantillons (104).

8. Système de présentation selon la revendication 7, dans lequel l'ouverture (117) formée dans la surface inférieure de l'adaptateur (102) a une taille, une forme et une position conformes à celles du renforcement (112) pour recevoir d'une manière amovible le porte-échantillons (104).

9. Système de présentation selon l'une quelconque des revendications précédentes, comprenant en outre un trou d'alignement (120) formé dans la surface supérieure (117a) de l'adaptateur (102) et positionné au voisinage immédiat d'un coin de l'adaptateur, pour assurer un alignement de l'adaptateur quand il est positionné dans le système d'analyse.

10. Système de présentation selon l'une quelconque des revendications précédentes, dans lequel :
le porte-échantillons (104) comprend un revêtement à motifs (124), appliqué sur le substrat (126) ;
une pluralité d'ouvertures (108) sont formées dans le revêtement à motifs (124), qui correspondent à une pluralité de portions exposées du substrat (126) ; et
le revêtement à motifs (124) est configuré de façon à restreindre spatialement des aliquotes individuelles (127) de l'échantillon de solution à des portions exposées individuelles du substrat de telle sorte que les aliquotes soient positionnées pour une mesure par le système d'analyse.

11. Système de présentation selon la revendication 10, dans lequel :
une dimension d'une ouverture individuelle de la pluralité d'ouvertures (108) minimise une dimension d'une portion exposée individuelle du substrat (126), qui correspond à l'ouverture individuelle ; et
la dimension de l'ouverture individuelle maximise la quantité de lumière absorbée par une aliquote individuelle (127) de l'échantillon de solution, restreinte par le revêtement à motifs (124) à la portion exposée individuelle du substrat (126).

12. Arrangement comprenant un système d'analyse et un système de présentation selon l'une quelconque des revendications précédentes, dans lequel :
le système d'analyse comprend un trajet pour un faisceau lumineux projeté par le système d'analyse ;
le porte-échantillons (104) porte des aliquotes (127) de l'échantillon de solution ;
l'adaptateur (102) est configuré de façon à positionner le porte-échantillons (104) de telle sorte que les aliquotes (127) de l'échantillon de solution soient positionnées respectivement dans le trajet lumineux de telle sorte qu'une quantité de lumière soit absorbée par les aliquotes ; et
le renfoncement (112) est configuré de façon à positionner le porte-échantillons (104) à une hauteur prédéterminée telle que les aliquotes (127) de la solution échantillons soient positionnées au voisinage immédiat d'une portion étroite du faisceau lumineux.

13. Système de présentation (100) pour un échantillon de solution pour une utilisation dans un système d'analyse, comprenant :
un adaptateur (102), configuré pour positionner des aliquotes (127) de la solution pour mesure par le système d'analyse, et
un porte-échantillons (104) ;
dans lequel l'adaptateur (102) comprend un renfoncement (112) formé dans une surface supérieure (117a) de l'adaptateur pour recevoir d'une manière amovible le porte-échantillons (104) qui contient les aliquotes (127) de l'échantillon de solution, de telle sorte que le porte-échantillons (104) soit logé dans le renfoncement (112) quand le porte-échantillons est inséré dans le renfoncement ;
le renfoncement (112) ayant une forme qui épouse au moins une portion d'une forme du porte-échantillons (104) de telle sorte que le renfoncement maintienne le porte-échantillons en place pendant la mesure des aliquotes (127) ; et
le renfoncement (112) ayant une profondeur prédéterminée, suffisante pour recevoir le porte-échantillons (104) et une plaque de couverture (106) quand le porte-échantillons et la plaque de couverture sont insérés dans le renfoncement ;
**caractérisé en ce que**
le porte-échantillons (104) comprend un élément séparateur fixé à une surface supérieure (110) du porte-échantillons, et la plaque de couverture (106) repose sur l'élément séparateur, la plaque de couverture étant séparée du porte-échantillons à une distance prédéterminée quand le porte-échantillons et la plaque de couverture sont logés dans le renfoncement (112) de l'adaptateur (102).
